# EUROPÄISCHE PATENTANMELDUNG

(11) **EP 2 525 413 A2**
(43) Veröffentlichungstag der Anmeldung: **21.11.2012**
(21) Anmeldenummer: 12165948.6
(22) Anmeldetag: 27.04.2012
(51) Int. Cl.: H01L 31/048, F24J 2/52

(54) **Vorrichtung zur Befestigung von Photovoltaikmodulen auf einem Flachdach**

(30) Priorität: 18.05.2011 DE 202011100947 U
(71) Anmelder: Palme Solar GmbH, 89542 Herbrechtingen (DE)
(72) Erfinder: Palme, Klaus Manfred, 73432 Alen (DE)
(74) Vertreter: Witte, Weller & Partner

(57) **Zusammenfassung**

Es wird eine Vorrichtung zur Befestigung von Photovoltaikmodulen auf einem Flachdach angegeben, mit Mittelschienen (16), mit Fußtragschienen (18, 20), die beidseits der Mittelschienen (16) vorgesehen sind, mit Querverbindern zur Verbindung der Fußtragschienen (18, 20) und der Mittelschienen (16), mit Sturmschienen (22) zur endseitigen Verbindung der Fußtragschienen (18, 20) und der Mittelschienen (16), und mit Stützelementen zur Aufnahme und Befestigung von Photovoltaikmodulen zumindest an den Mittelschienen (16) und den Fußtragschienen (18, 20), wobei die Mittelschienen (16), Fußtragschienen (18, 20), Querverbinder und Sturmschienen (22) zur Verlegung auf einer Oberfläche des Flachdaches ohne Verankerung am Flachdach ausgebildet sind (Fig. 2).

## Beschreibung

Die Erfindung betrifft eine Vorrichtung zur Befestigung von Photovoltaikmodulen auf einem Flachdach, bei dem die Photovoltaikmodulen mit Hilfe von Schienen und daran befestigten Stützen gehalten sind.

Photovoltaikmodule werden heutzutage auf den verschiedenartigsten Dachformen montiert. Weit verbreitet ist die Befestigung auf Satteldächern, insbesondere bei Wohnhäusern. Es gibt jedoch zahlreiche Flachdächer, insbesondere im gewerblichen Bereich, die zur Befestigung von Photovoltaikmodulen genutzt werden könnten. Ein Nachteil hierbei ist häufig die geringe Tragkraft der vorhandenen Flachdachkonstruktionen und eine mögliche Beschädigung der Dachhaut bei der Montage der Unterkonstruktion für die Photovoltaikmodule. Des Weiteren müssen die betreffenden Konstruktionen zur Befestigung von Photovoltaikmodulen eine ausreichende Sicherheit bei Schneelast und Windbeanspruchung bieten.

Die bekannten Dachkonstruktionen werden diesen Anforderungen in der Regel nicht gerecht.

Die Aufgabe der vorliegenden Erfindung besteht somit darin, eine Vorrichtung zur Befestigung von Photovoltaikmodulen auf einem Flachdach anzugeben, mit der eine langzeitstabile, einfache und sichere Befestigung von Photovoltaikmodulen auf einem Flachdach ermöglicht ist. Hierbei soll die Konstruktion möglichst ohne Verankerung am Flachdach auskommen und eine ausreichende Sicherheit gegen Schneelasten und Windlasten bieten.

Ferner soll die Montage der Vorrichtung möglichst einfach sein.

Diese Aufgabe wird durch eine Vorrichtung zur Befestigung von Photovoltaikmodulen auf einem Flachdach gelöst, mit Mittelschienen, mit Fußtragschienen, die beidseits der Mittelschienen vorgesehen sind, mit Querverbindern zur Verbindung der Fußtragschienen und der Mittelschienen, mit Sturmschienen zur endseitigen Verbindung der Fußtragschienen und der Mittelschienen, und mit Stützelementen zur Aufnahme und Befestigung von Photovoltaikmodulen zumindest an den Mittelschienen und den Fußtragschienen, wobei die Mittelschienen, Fußtragschienen, Querverbinder und Sturmschienen zur Verlegung auf einer Oberfläche des Flachdaches ohne Verankerung am Flachdach ausgebildet sind.

Die Aufgabe der Erfindung wird ferner in alternativer Weise durch eine Vorrichtung zur Befestigung von Photovoltaikmodulen auf einem Flachdach gelöst, mit Mittelschienen, mit Fußtragschienen, die beidseits der Mittelschienen vorgesehen sind, mit Querverbindern zur Verbindung der Fußtragschienen und der Mittelschienen, mit Sturmschienen zur endseitigen Verbindung der Fußtragschienen und der Mittelschienen, und mit Stützelementen zur Aufnahme und Befestigung von Photovoltaikmodulen zumindest an den Mittelschienen und den Fußtragschienen, bei der zumindest die Mittelschienen, die Fußtragschienen und/oder die Sturmschienen an ihrer Unterseite Aufnahmemittel zur Verankerung von Bautenschutzmatten aufweisen.

Die Aufgabe der Erfindung wird auf diese Weise vollkommen gelöst.

Durch die erfindungsgemäße Konstruktion der Vorrichtung zur Befestigung von Photovoltaikmodulen kann die gesamte Vorrichtung einschließlich der Photovoltaikmodule ohne Verankerung am Flachdach verlegt werden.

Es sind keine zusätzlichen Beschwerungselemente notwendig.

Dies wird durch eine besondere Form der montierten Photovoltaikanlage gewährleistet. Jeweils zwei Reihen von Photovoltaikmodulen sind über eine Firstverbindung zu einem Sattelelement verbunden, wobei im Firstbereich ein Spalt verbleibt. Es kann eine beliebige Anzahl von Sattelelementen nebeneinander angeordnet sein, wobei dazwischen jeweils ein Zwischenraum zwecks der Zugänglichkeit frei bleibt.

Der Verlegewinkel für die Photovoltaikmodule beträgt vorzugsweise 5° bis 25°, weiter bevorzugt 5° bis 15°, besonders bevorzugt etwa 10° gegenüber der Horizontalen. Es können mehrere derartige Einheiten voneinander beabstandet nebeneinander angeordnet werden.

Da zumindest die Mittelschienen, Fußtragschienen und/oder Sturmschienen an ihrer Unterseite Aufnahmemittel zur Verankerung von Bautenschutzmatten aufweisen, können die Grundelemente der Konstruktion, die Mittelschienen, die Fußtragschienen und die Sturmschienen unmittelbar mit den garantierten daran montierten Bautenschutzmatten auf der Dachoberfläche verlegt werden. Es ergibt sich auf diese Weise eine besonders einfache Montage ohne, dass eine Befestigung an der Dachhaut notwendig ist.

In bevorzugter Weiterbildung der Erfindung sind zumindest die Mittelschienen, die Fußtragschienen und/oder die Sturmschienen an ihrer Unterseite mit Bautenschutzmatten zur Auflage auf der Oberfläche des Flachdaches versehen. Hierbei sind die Bautenschutzmatten bevorzugt an der Unterseite der Mittelschienen, der Fußtragschienen und/oder der Sturmschienen mittels Befestigungsmitteln gehalten.

Als Befestigungsmittel können vorteilhaft Dübel, insbesondere Kunststoffdübel vorgesehen sein, die sich durch Löcher in den Bautenschutzmatten erstrecken und die in zugeordnete Ausnehmungen an den Mittelschienen, Fußtragschienen und/oder Sturmschienen eingeschlagen sind.

Auf diese Weise ist eine einfache und zuverlässige Montage der Bautenschutzmatten an der Unterseite der Mittelschienen, Fußtragschienen bzw. Sturmschienen gewährleistet. Die Bautenschutzmatten müssen nicht zuvor auf der Dachoberfläche positioniert werden, sondern können gemeinsam mit der vorbereiteten Unterkonstruktion aus Mittelschienen, Fußtragschienen, Sturmschienen und Querverbindern auf der Dachoberfläche positioniert werden, da sie an den betreffenden Schienen befestigt sind.

Gemäß einer weiteren Ausführung der Erfindung sind zumindest die Mittelschienen, Fußtragschienen und/oder Sturmschienen als Strangpressprofile ausgebildet, die vorzugsweise aus Aluminium bestehen und die jeweils zwei seitliche Längsnuten zur Befestigung von Stützelementen mittels in die Längsnuten eingeführter Nutensteine und daran verankerbaren Schrauben aufweisen.

Auf diese Weise ist eine besonders einfache und zuverlässige Montage der Stützelemente für die Photovoltaikmodule gewährleistet.

Die Aufnahmemittel zur Verankerung der Bautenschutzmatten an der Unterseite der Mittelschienen, Fußtragschienen und/oder Sturmschienen sind in vorteilhafter Weiterbildung der Erfindung als Längsnuten an der Unterseite ausgebildet. Daran können die Befestigungsmittel, insbesondere Dübel, für die Bautenschutzmatten verankert werden.

So ergibt sich eine besonders einfache und zuverlässige Montage der Bautenschutzmatten.

Gemäß einer weiteren Ausführung der Erfindung sind Mittelstützen vorgesehen, die an den Mittelschienen festlegbar sind, wobei jede Mittelstütze als Strangpressprofil mit einer zentralen Nut an ihrem oberen Ende zur Befestigung von Photovoltaikmodulen mittels Firstklemmen ausgebildet ist, die an Nutsteinen in der zentralen Nut gehalten sind, wobei beidseits Auflageflächen zur Auflage je eines Photovoltaikmoduls auf jeder Seite vorgesehen sind.

In weiter vorteilhafter Ausgestaltung der Erfindung kann jede Mittelstütze an ihrer Unterseite einen Fuß aufweisen, der zur Auflage auf den Mittelschienen ausgebildet ist und über zumindest eine seitliche Schraube, mittels eines Nutensteins in einer Längsnut einer Mittelschiene verankerbar ist.

Auf diese Weise ist eine besonders einfache und zuverlässige Montage der Photovoltaikmodule auf der Firstseite gewährleistet.

Gemäß einer Weiterbildung der Erfindung ist bei jeder Mittelstütze die Form des Profils im Bereich des Fußes derart auf die Mittelschienen abgestimmt, dass die Mittelstütze von oben auf einer Mittelschiene aufgedrückt und damit verrastet werden kann, so dass die Mittelstütze in einer vorbestimmten Höhe auf der Mittelschiene gehalten ist.

Hierdurch ergibt sich eine erhebliche Montageerleichterung, da die Mittelstützen automatisch auf den Mittelschienen in der vorbestimmten Höhe positioniert werden.

Gemäß einer weiteren Ausgestaltung der Erfindung weisen die Fußtragschienen jeweils eine Auflagefläche zur Auflage und eine Anschlagfläche zur Positionierung eines Photovoltaikmoduls auf.

Hierdurch wird eine korrekte Positionierung der Photovoltaikmodule im Bereich der Fußtragschienen auf einfache Weise gewährleistet.

Gemäß einer weiteren Ausgestaltung der Erfindung weisen die Fußtragschienen jeweils eine Nut an der Oberseite auf, die zur Befestigung eines Photovoltaikmoduls mittels eines Winkels ausgebildet ist, der über eine Schraube, die in einen Nutenstein in der Nut eingreift, an der Fußtragschiene festlegbar ist.

Auf diese Weise ist eine Klemmbefestigung der Photovoltaikmodule an den Fußtragschienen auf besonders einfache Weise ermöglicht.

Gemäß einer weiteren Ausgestaltung der Erfindung sind die Querverbinder mit den Mittelschienen und den Fußtragschienen über Schrauben verbindbar, welche in Nutensteine eingreifen, die in seitlich verlaufenden Längsnuten der Mittelschienen und der Fußtragschienen gehalten sind.

Auf diese Weise ist eine einfache Befestigung und Montage der Querverbinder an den Mittelschienen und den Fußtragschienen gewährleistet.

Bei den Querverbindern kann es sich bspw. um gestanzte und gefalzte Aluminiumstreifen handeln. Die Querverbinder dienen lediglich zur korrekten Positionierung bzw. Abstandsfestlegung zwischen Mittelschienen und Fußtragschienen.

Gemäß einer weiteren Ausgestaltung der Erfindung sind die Sturmschienen jeweils am Ende der Fußtragschienen und der Mittelschienen mittels Befestigungswinkeln und Schrauben, die in an seitlichen Längsnuten der Fußtragschienen und der Mittelschienen gehaltene Nutensteine, eingreifen, festlegbar.

Auf diese Weise ist eine einfache und zuverlässige Montage der Sturmschienen an den Fußtragschienen bzw. Mittelschienen gewährleistet.

Soweit mehrere Solarmodulreihen, die jeweils über eine Firstverbindung miteinander gekoppelt sind, voneinander beabstandet nebeneinander montiert werden sollen, so können die verbleibenden Abstände zwischen benachbarten Fußtragschienen über ihre Verbindung mit den Sturmschienen eingestellt bzw. vorgegeben werden.

Gemäß einer weiteren Ausführung der Erfindung ist zur Befestigung der Photovoltaikmodule an den Mittelstützen mittels Firstklemmung jeweils eine Firstkappe vorgesehen, die mittels einer mit einer Druckfeder in eine Lösestellung vorgespannten Schraube, die in einen in der zentralen Nut der Mittelstütze gehaltenen Nutenstein eingreift, festlegbar ist.

Bei einer derartigen Ausführung kann die Firstklemmung an der Mittelstütze vormontiert sein.

Durch diese Maßnahmen wird eine besonders einfache Montage der Photovoltaikmodule im Firstbereich an den Mittelstützen ermöglicht.

Gemäß einer weiteren Ausgestaltung der Erfindung umfassen die Sturmschienen jeweils einen Kabelkanal.

Auf diese Weise wird die Verkabelung der auf der Stützkonstruktion verlegten Photovoltaikmodule vereinfacht.

Es versteht sich, dass die vorstehend genannten und die nachstehend noch zu erläuternden Merkmale der Erfindung nicht nur in der jeweils angegebenen Kombination sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung. Es zeigen.
- Fig. 1: eine perspektivische Aufsicht von schräg oben auf ein Solardach mit einer Mehrzahl von Photovoltaikmodulen, die mittels einer erfindungsgemäßen Vorrichtung auf der Oberfläche eines Flachdaches montiert sind;
- Fig. 2: eine vergrößerte Teilansicht der erfindungsgemäßen Vorrichtung gemäß Fig. 1, jedoch ohne Photovoltaikmodule;
- Fig. 3: eine perspektivische Teilansicht einer Mittelschiene mit einer daran befestigten Mittelstütze und seitlichen Querverbindern;
- Fig. 4: eine Teil-Seitenansicht auf eine Mittelstütze, die auf einer Mittelschiene befestigt ist und in ihrem oberen Bereich zwei Photovoltaikmodule mittels Firstklemmung aufnimmt;
- Fig. 5: eine Teil-Seitenansicht auf eine Fußtragschiene mit einem dran mittels Klemmung befestigten Photovoltaikmodul;
- Fig. 6: eine perspektivische Teildarstellung, die eine Verbindung zwischen einer Sturmschiene und einer Fußtragschiene verdeutlicht;
- Fig. 7: eine Teilansicht einer Fußtragschiene in perspektivischer Darstellung;
- Fig. 8: eine Endansicht der Fußtragschiene gemäß Fig. 7;
- Fig. 9: eine Endansicht einer Mittelschiene;
- Fig. 10: eine perspektivische Teilansicht der Mittelschiene gemäß Fig. 9;
- Fig. 11: eine Seitenansicht einer Mittelstütze gemäß Fig. 3 in vergrößerter Darstellung und
- Fig. 12: eine Längsansicht der Mittelstütze gemäß Fig. 11.

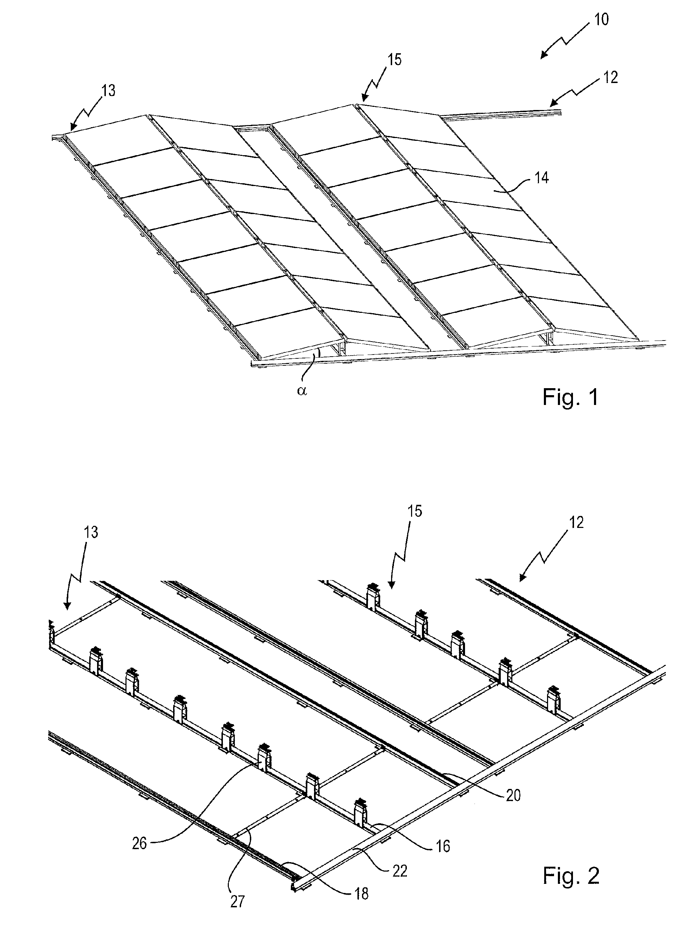

Fig. 1 zeigt eine perspektivische Teilansicht eines Solardaches mit Photovoltaikmodulen 14, das auf einer ebenen Oberfläche eines Flachdaches montiert ist.

Das gesamte Solardach 10 besteht aus einer Mehrzahl von Sattelelementen 13, 15, die nebeneinander mit einem gewissen Abstand dazwischen montiert sind. Jedes Sattelelement 13, 15 besteht aus zwei Reihen von Photovoltaikmodulen 14, die in der Mitte in einem Firstbereich unter Freibleiben eines Spaltes zwischen den Photovoltaikmodulen 14 miteinander verbunden sind. Dabei ist der Aufbau symmetrisch, so dass sich im Querschnitt gleichschenklige Dreiecke ergeben, mit einem seitlichen Öffnungswinkel α von etwa 10° gegenüber der Horizontalen.

Die erfindungsgemäße Vorrichtung 12 zur Befestigung von Photovoltaikmodulen kommt ohne Befestigungsmittel an der Dachoberfläche und ohne Zusatzgewichte aus und ist anwendbar für Flachdächer mit einer Neigung von bis zu 30°. Die Konstruktion erfüllt die Anforderungen der Schneelastzone 3 und der Windlastzone 4 und ist somit für ganz Deutschland zugelassen. Die Vorrichtung 12 wird vorzugsweise mit ihrem First jeweils in Nord-Süd-Richtung ausgerichtet, um eine optimale Ausnutzung der Solarstrahlung zu gewährleisten. Es kann eine beliebige Anzahl von Sattelelementen 13, 15 parallel zueinander aufgebaut werden, wobei jeweils ein Zwischenraum für die Zugänglichkeit vorzugsweise mit einem Abstand von etwa 400 mm vorgesehen ist. Aufgrund der aerodynamisch günstigen Form der Sattelelemente 13, 15 ist eine Befestigung in der Dachoberfläche nicht notwendig.

Fig. 2 zeigt die erfindungsgemäße Vorrichtung zur Befestigung von Photovoltaikmodulen 14 gemäß Fig. 1 in leicht vergrößerter Darstellung, jedoch ohne die Photovoltaikmodule 14.

Es ist ersichtlich, dass jedes Sattelelement aus einer Mittelschiene 16 mit je einer Fußtragschiene 18, 20 auf jeder Seite besteht, wobei zur Festlegung des Abstands zwischen der Mittelschiene 16 und den Fußtragschienen 18, 20 Querverbinder 24 vorgesehen sind. Endseitig ist jedes Sattelelement mit einer Sturmschiene 22 verbunden. Über die Sturmschienen 22 wird auch der Abstand zwischen benachbarten Sattelelementen 13, 15 festgelegt.

In Fig. 2 sind ferner auf den Mittelschienen 16 befestigte Mittelstützen 26 erkennbar, die zur Befestigung der Photovoltaikmodule 14 im Firstbereich dienen.

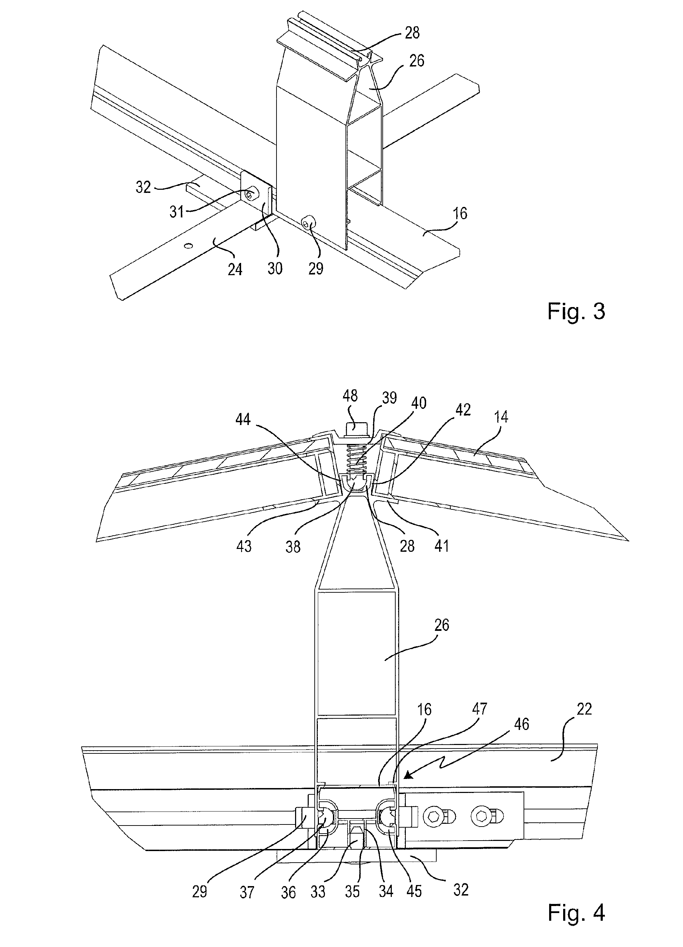

Im Folgenden werden die Einzelheiten der erfindungsgemäßen Vorrichtung anhand der Figuren 3 bis 12 näher erläutert.

Fig. 3 zeigt die Befestigung einer Mittelstütze 26 auf einer Mittelschiene 16, sowie an der Mittelschiene 16 befestigte Querverbinder 24.

Die Befestigung der Mittelstütze 26 auf der Mittelschiene 16 und die Befestigung von Photovoltaikmodulen 14 auf dem oberen Ende einer Mittelstütze 26 mit Hilfe von Firstverbindern ist im Einzelnen aus Fig. 4 zu ersehen.

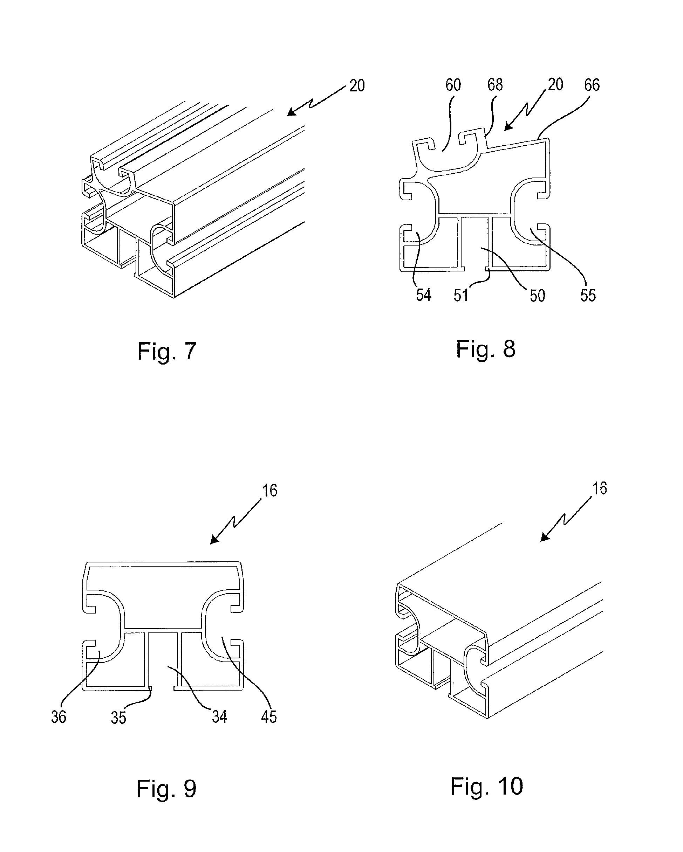

Wie näher aus den Figuren 9 und 10 zu ersehen ist, ist jede Mittelschiene 16 als Strangpressprofil mit bezüglich der Längsmittelachse symmetrischer Form ausgebildet. Auf den beiden Seitenflächen ist jeweils eine Längsnut 36, 45 vorgesehen, die zur Aufnahme von Nutensteinen ausgebildet sind, in denen Schrauben fixiert werden können. An der Unterseite der Mittelschiene 16 ist mittig eine Längsnut 34 ausgebildet, die nach innen hin durch leicht hervorstehende Stege 35 an der Außenfläche verjüngt ist. Diese Längsnut 34 dient zur Aufnahme von Kunststoffdübeln 33 gemäß Fig. 4. Mittels eines Kunststoffdübels 33 kann eine Bautenschutzmatte 32 an der Längsnut 34 befestigt werden.

Die verwendeten Bautenschutzmatten bestehen aus einem Kunststoffmaterial und sind alukaschiert und haben vorzugsweise die Maße von 100 x 100 x 8 mm. Die Bautenschutzmatten 32 werden sowohl an der Unterseite der Mittelschienen 16 als auch an der Unterseite der Fußtragschienen 18, 20 und der Sturmschienen 22 in Abständen von ca. 1 m montiert.

Die Montage der Bautenschutzmatten gestaltet sich besonders einfach, da gemäß Fig. 4 nur jeweils ein Kunststoffdübel 33 durch ein entsprechendes Loch in der Mitte einer Bautenschutzmatte 32 hindurch in die Längsnut 34 eingeschlagen werden muss.

In entsprechender Weise werden die Bautenschutzmatten an der Unterseite der Fußtragschienen 18, 20 bzw. der Sturmschienen 22 befestigt, wie nachstehend noch erläutert wird.

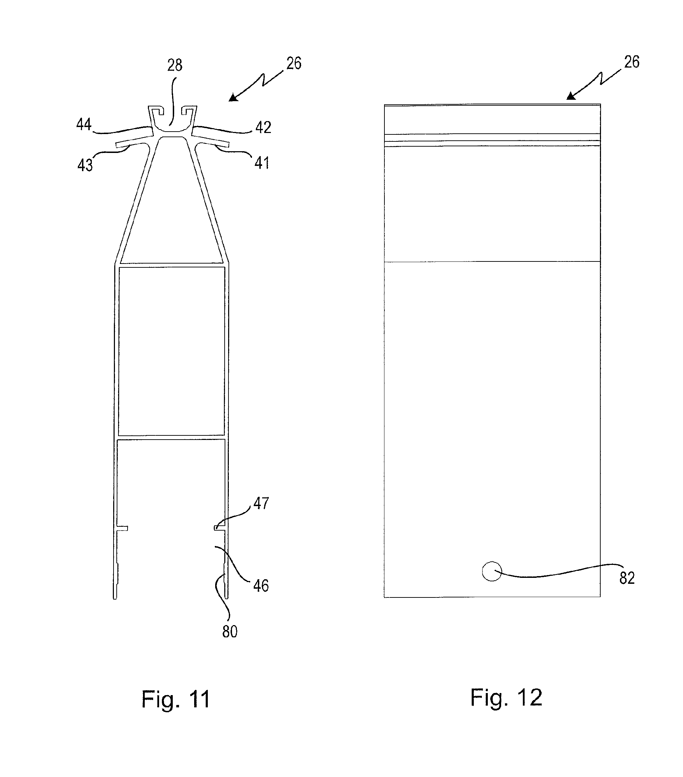

Die Mittelstützen 26 sind gleichfalls als Strangpressprofile ausgebildet und weisen an ihrem unteren Ende jeweils einen Fuß 46 auf (vgl. Fig. 11), der zur Positionierung auf einer Mittelschiene 16 dient. Im Fußbereich steht jeweils ein Steg 47 nach innen hin hervor und bildet eine Auflage für die Oberseite einer Mittelschiene 16. In geeignetem Abstand unterhalb der Stege 47 befindet sich ein nach innen weisender Vorsprung 80 auf jeder Seite der Mittelstütze 26, der zum Einclipsen in die Nuten 36, 45 an einer Mittelschiene 16 dient. Auf diese Weise kann eine Mittelstütze 26 von oben auf eine Mittelschiene 16 aufgesetzt und daran festgeclipst bzw. verrastet werden. Somit ist die vertikale Positionierung der Mittelstütze 26 sicher gewährleistet. Zur Befestigung an der Mittelschiene 16 dienen gemäß Fig. 4 Nutensteine 37, die in die seitlichen Längsnuten 36 bzw. 45 eingeführt werden und in die Schrauben 29 eingeschraubt werden.

Am oberen Ende jeder Mittelstütze 26 befinden sich gemäß Fig. 11 jeweils eine Auflagefläche 41 und eine Auflagefläche 43 zur Positionierung eines Photovoltaikmoduls 14 auf jeder Seite. Zugeordnete Anschlagflächen 42, 44 gewährleisten eine korrekte Positionierung der Photovoltaikmodule 14.

Gemäß Fig. 4 werden die Photovoltaikmodule 14 im Firstbereich mittels Firstklemmungen befestigt. Hierzu ist am oberen Ende einer jeden Mittelstütze 26 eine zentrale Nut 28 vorgesehen, in der eine Schraube 48 unter Zwischenlage einer Druckfeder 40 befestigt werden kann, um eine Firstkappe 39 anzuziehen, mit der die benachbarten Photovoltaikmodule 14 auf jeder Seite durch Klemmung befestigt werden können. In Folge der Druckfeder 40 können die Firstklemmungen bereits an den Mittelstützen 26 vormontiert werden und müssen nur noch nach Auflage der Photovoltaikmodule 14 durch Anziehen der Schrauben 48 gesichert werden.

Aus der Ansicht gemäß Fig. 12 ist ferner noch erkennbar, dass jede Mittelstütze 26 im Bereich ihrer Seitenflächen eine Ausnehmung 82 zur Durchführung jeweils einer Schraube 29 aufweist, um die Mittelstütze 26 mit Hilfe von Nutensteinen 37 in einer der Längsnuten 36 bzw. 45 an einer Mittelschiene 16 zu sichern (vgl. Fig. 3).

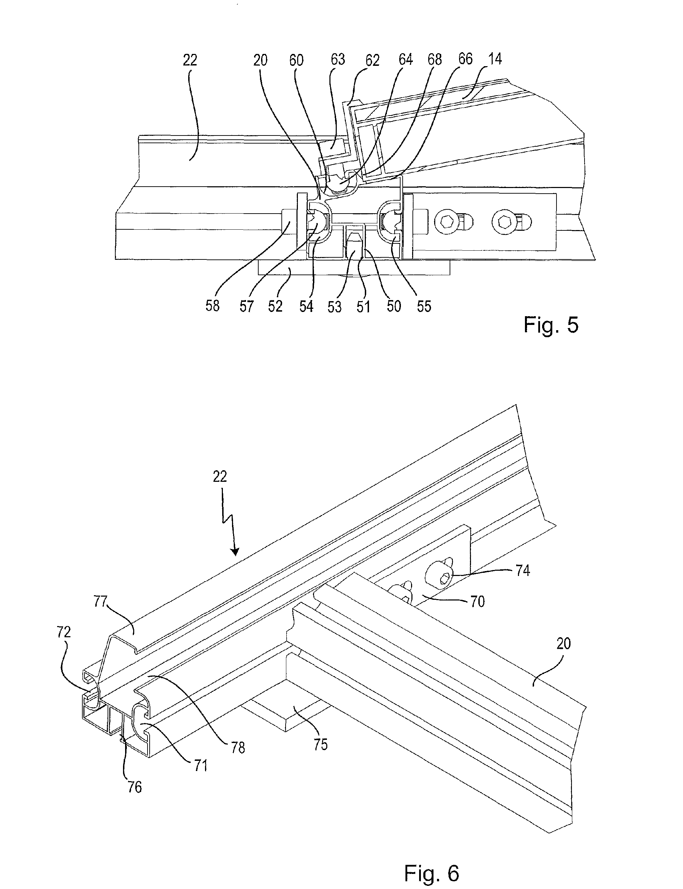

Aus den Figuren 5, 7 und 8 ist ersichtlich, wie die Photovoltaikmodule 14 im Fußbereich an den Fußtragschienen 18 bzw. 20 befestigt werden.

Wir aus den Figuren 7 und 8 ersichtlich, weisen die Fußtragschienen 18 bzw. 20 seitlich jeweils eine Längsnut 54 bzw. 55 auf, die zur Aufnahme von Nutensteinen zur Befestigung von Schrauben dienen. An der Oberseite ist im vorgegebenen Winkel eine Auflagefläche 66 und eine zugeordnete Anschlagfläche 68 zur Positionierung eines Photovoltaikmoduls 14 vorgesehen. Daneben befindet an der Oberseite eine Längsnut 60, die zur Aufnahme von Nutensteinen dient, wie aus Fig. 5 näher ersichtlich ist.

An der Unterseite jeder Fußtragschiene 18 bzw. 20 ist wiederum mittig eine Längsnut 50 mit jeweils nach innen hervorstehenden Stegen 51 vorgesehen, die zur Aufnahme von Kunststoffdübeln 53 gemäß Fig. 5 dient.

Hieran wird jeweils eine Bautenschutzmatte 52 in der zuvor anhand von Fig. 4 beschriebenen Weise mit Hilfe eines Kunststoffdübels 53 befestigt. Die Photovoltaikmodule 14 werden nach Auflage auf der Auflagefläche 66 und Anlage an der Anschlagfläche 68 mit Hilfe eines Winkels 62 durch Klemmung fixiert. Zur Befestigung des Winkels 62 dient jeweils eine Schraube 63, die in einen Nutenstein 64 eingreift, der in die Nut 60 an der Oberseite der Fußtragschiene 18 bzw. 20 eingeführt ist.

Die seitlichen Längsnuten 54, 55 an den Fußtragschienen 18 bzw 20 dienen zur Befestigung entweder von Querverbindern 24 oder von Sturmschienen 22 mittels Nutensteinen 57 und zugeordneten Schrauben 58.

Fig. 6 zeigt eine Verbindung zwischen einer Fußtragschiene 20 und einer Sturmschiene 22. Zur Verbindung werden Winkel 70 verwendet, die mittels Schrauben 74 befestigt werden, die in Nutensteine eingreifen, die in seitliche Längsnuten 71 bzw. 72 an den Sturmschienen 22 eingeführt sind. Auch im Verbindungsbereich zwischen Fußtragschienen 20 bzw. 18 und Sturmschienen 22 werden an der Unterseite jeweils Bautenschutzmatten 75 befestigt, und zwar in der zuvor anhand der Figuren 4 bzw. 5 beschriebenen Weise durch Einschlagen von Kunststoffdübeln in eine Nut 76 an der Unterseite der Sturmschienen 22.

Aus Fig. 6 ist ferner ersichtlich, dass jede Sturmschiene 22 ein windabweisendes Außenprofil 77 und einen Kabelkanal 78 aufweist.

Die Mittelschienen 16, die Fußtragschienen 18, 20 und die Sturmschienen 22 sind sämtlich im Stranggussverfahren aus einer Aluminiumlegierung hergestellt.

Bei den verwendeten Schrauben handelt es sich vorzugsweise um Innensechskantschrauben in rostfreier Ausführung gemäß DIN912.

## Patentansprüche

1. Vorrichtung zur Befestigung von Photovoltaikmodulen (14) auf einem Flachdach, mit Mittelschienen (16), mit Fußtragschienen (18, 20), die beidseits der Mittelschienen (16) vorgesehen sind, mit Querverbindern (24) zur Verbindung der Fußtragschienen (18, 20) und der Mittelschienen (16), mit Sturmschienen (22) zur endseitigen Verbindung der Fußtragschienen (18, 20) und der Mittelschienen (16), und mit Stützelementen zur Aufnahme und Befestigung von Photovoltaikmodulen (14) zumindest an den Mittelschienen (16) und den Fußtragschienen (18, 20), **dadurch gekennzeichnet, dass** die Mittelschienen (16), Fußtragschienen (18, 20), Querverbinder (24) und Sturmschienen (22) zur Verlegung auf einer Oberfläche des Flachdaches ohne Verankerung am Flachdach ausgebildet sind.

2. Vorrichtung nach Anspruch 1, **dadurch gekennzeichnet, dass** zumindest die Mittelschienen (16), die Fußtragschienen (18, 20) und/oder die Sturmschienen (22) an ihrer Unterseite mit Bautenschutzmatten (32, 52) zur Auflage auf der Oberfläche des Flachdaches versehen sind.

3. Vorrichtung nach Anspruch 2, **dadurch gekennzeichnet, dass** die Bautenschutzmatten (32, 52) an der Unterseite der Mittelschienen (16), der Fußtragschienen (18, 20) und/oder der Sturmschienen (22) mittels Befestigungsmitteln (33, 53) gehalten sind.

4. Vorrichtung nach Anspruch 3, **dadurch gekennzeichnet, dass** die Befestigungsmittel (33) als Dübel, vorzugsweise Kunststoffdübel, ausgebildet sind, die sich durch Löcher in den Bautenschutzmatten (32, 52) erstrecken und in zugeordnete Ausnehmungen (34, 50) an den Mittelschienen (16), Fußtragschienen (18, 20) und/oder Sturmschienen (22) eingeschlagen sind, wobei vorzugsweise zumindest die Mittelschienen (16), Fußtragschienen (18, 20) und/oder Sturmschienen (22) an ihrer Unterseite Aufnahmemittel (34, 50, 76) zur Verankerung von Bautenschutzmatten (32, 52, 75) aufweisen.

5. Vorrichtung nach einem der vorhergehenden Ansprüche, **dadurch gekennzeichnet, dass** zumindest die Mittelschienen (16), Fußtragschienen (18, 20) und/oder Sturmschienen (22) als Strangpressprofile ausgebildet sind, die vorzugsweise aus Aluminium bestehen und die jeweils zwei seitliche Längsnuten (36, 45, 54, 55) zur Befestigung von Stützelementen mittels in die Längsnuten (36, 45, 54, 55) eingeführter Nutensteine (37) und daran verankerbaren Schrauben (29, 58, 74) aufweisen.

6. Vorrichtung nach Anspruch 4 oder 5, **dadurch gekennzeichnet, dass** die Aufnahmemittel (34, 50, 76) zur Verankerung der Bautenschutzmatten (32, 52, 75) als Längsnuten an der Unterseite ausgebildet sind, in denen Befestigungsmittel (33, 53), insbesondere Dübel, für die Bautenschutzmatten (32, 52, 75) verankerbar sind.

7. Vorrichtung nach einem der vorhergehenden Ansprüche, **dadurch gekennzeichnet, dass** Mittelstützen (26) vorgesehen sind, die an den Mittelschienen (16) festlegbar sind, wobei jede Mittelstütze (26) als Strangpressprofil mit einer zentralen Nut (28) an ihrem oberen Ende zur Befestigung von Photovoltaikmodulen (14) mittels Firstklemmen (39), die an Nutsteinen (38) in der zentralen Nut (28) gehalten sind, wobei beidseits Auflageflächen (41, 43) zur Auflage je eines Photovoltaikmoduls (14) auf jeder Seite vorgesehen sind.

8. Vorrichtung nach Anspruch 7, **dadurch gekennzeichnet, dass** jede Mittelstütze (26) an ihrer Unterseite einen Fuß (46) aufweist, der zur Auflage auf den Mittelschienen (16) ausgebildet ist und über zumindest je eine seitliche Schraube (29), mittels eines Nutensteins (37) in einer Längsnut (36, 45) einer Mittelschiene (16) verankerbar ist.

9. Vorrichtung nach Anspruch 8, **dadurch gekennzeichnet, dass** bei jeder Mittelstütze (26) die Form des Profils im Bereich des Fußes (46) derart auf die Mittelschienen (16) abgestimmt ist, dass die Mittelstütze (26) von oben auf eine Mittelschiene (16) aufgedrückt und damit verrastet werden kann, so dass die Mittelstütze in einer vorbestimmten Höhe auf der Mittelschiene (16) gehalten ist.

10. Vorrichtung nach einem der vorhergehenden Ansprüche, **dadurch gekennzeichnet, dass** die Fußtragschienen (18, 20) jeweils eine Auflagefläche (66) zur Auflage und eine Anschlagfläche (68) zur Positionierung eines Photovoltaikmoduls (14) aufweisen.

11. Vorrichtung nach Anspruch 10, **dadurch gekennzeichnet, dass** die Fußtragschienen (18, 20) jeweils eine Nut (60) an der Oberseite aufweisen, die zur Befestigung eines Photovoltaikmoduls (14) mittels eines Winkels (62) ausgebildet ist, der über eine Schraube (63), die in einen Nutenstein (64) in der Nut (60) eingreift, an der Fußtragschiene (20) festlegbar ist.

12. Vorrichtung nach einem der Ansprüche 5 bis 11, **dadurch gekennzeichnet, dass** die Auflageflächen (41, 43, 68) der Mittelstützen (26) und der Fußtragschienen (18, 20) derart winklig angeordnet und positioniert sind, dass sich ein Verlegewinkel (α) für die Photovoltaikmodule (14) von 5° bis 25°, vorzugsweise von 5° bis 15°, weiter bevorzugt von etwa 10° gegenüber der Horizontalen ergibt.

13. Vorrichtung nach einem der vorhergehenden Ansprüche, **dadurch gekennzeichnet, dass** die Querverbinder (24) mit den Mittelschienen (16) und den Fußtragschienen (18, 20) über Schrauben verbindbar sind, welche in Nutensteine eingreifen, die in seitlich verlaufenden Längsnuten (36, 45, 54, 55) der Mittelschienen (16) und der Fußtragschienen (18, 20) gehalten sind.

14. Vorrichtung nach einem der vorhergehenden Ansprüche, **dadurch gekennzeichnet, dass** die Sturmschienen (22) jeweils am Ende der Fußtragschienen (18, 20) und der Mittelschienen (16) mittels Befestigungswinkeln (74) und Schrauben (74)??, die in an seitlichen Längsnuten der Fußtragschienen (18, 20) und der Mittelschienen (22) gehaltene Nutensteine, eingreifen, festlegbar sind.

15. Vorrichtung nach einem der Ansprüche 5 bis 14, **dadurch gekennzeichnet, dass** zur Befestigung der Photovoltaikmodule (14) an den Mittelstützen (26) mittels Firstklemmung jeweils eine Firstkappe (39) vorgesehen ist, die mittels einer mit einer Druckfeder (40) in eine Lösestellung vorgespannten Schraube (48), die in einen in der zentralen Nut (28) der Mittelstütze (26) gehaltenen Nutenstein (38) eingreift, befestigt ist, wobei die Firstklemmung vorzugsweise an der Mittelstütze (26) vormontiert ist, und wobei die Sturmschienen (22) vorzugsweise jeweils einen Kabelkanal (78) umfassen.
